# EUROPEAN PATENT APPLICATION

(11) **EP 4 832 170 A1**
(43) Date of publication of application: **28.10.2026**
(21) Application number: 25171992.8
(22) Date of filing: 23.04.2025
(51) Int. Cl.: H01M 10/654, H01M 10/6557, H01M 10/6567

(54) **ELECTRIC BATTERY UNIT WITH AN IMPROVED TEMPERATURE-REGULATING SYSTEM**

(71) Applicant: C.R.F. Società Consortile per Azioni, 10043 Orbassano (Torino) (IT)
(72) Inventor: RICCO, Mr. Raffaele, I-10043 Orbassano (Torino) (IT)
(74) Representative: Buzzi, Notaro & Antonielli d'Oulx S.p.A.

(57) **Abstract**

An electric battery unit (1) comprises an array of battery cells (2) immersed in a temperature-regulating fluid within a container (4). The container (4) includes an inlet opening (5A) for the temperature-regulating fluid, communicating with an inlet collector chamber (5), which is arranged below the array of battery cells (2). The container (4) further comprises an outlet opening (6) for the temperature-regulating fluid, communicating with an outlet collector chamber (6), which is arranged above the array of battery cells (2). The inlet collector chamber (5) and the outlet collector chamber (6) communicate with each other both through a plurality of passages (7, 8) which include respective restricted sections (R) configured and sized to create a given pressure drop in the flow of the temperature-regulating fluid. In this way, the flow rate of the temperature-regulating fluid through all the passages (7, 8) is substantially uniform.

## Description

### Field of the invention

The present invention relates to an electric battery unit having an improved temperature-regulating system.

The invention relates in particular to an electric battery unit of the type comprising an array of battery cells immersed in a temperature-regulating fluid within a container of the battery unit, for maintaining the battery unit within a specified temperature range,
wherein the battery cells within the container form a matrix of cells aligned along two orthogonal directions,
wherein said container includes:
   - an inlet opening for the temperature-regulating fluid, communicating with an inlet collector chamber, which is arranged below the array of battery cells,
   - an outlet opening for the temperature-regulating fluid, communicating with an outlet collector chamber, which is arranged above the array of battery cells,
wherein the inlet collector chamber and the outlet collector chamber communicate with each other through a plurality of passages.

### Prior art

Electric battery units having a temperature-regulating system of the type indicated above have been known and used for some time.

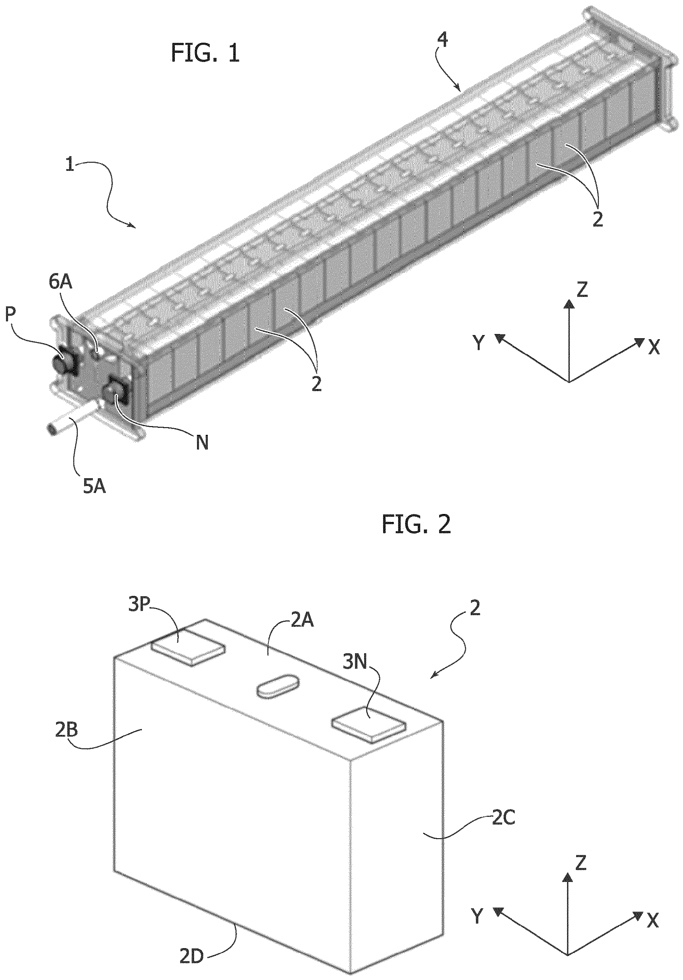

Figure 1 of the attached drawings shows an example of an electric battery module 1, comprising an aligned array of battery cells 2 of the prismatic type illustrated in figure 2. This type of battery cell includes an enclosure with an upper wall 2A from which the positive and negative poles 3P and 3N of the cell 2 protrude, two main walls 2B (only one of which is visible in figure 2), two end walls 2C (only one of which is visible in figure 2) and a lower wall 2D.

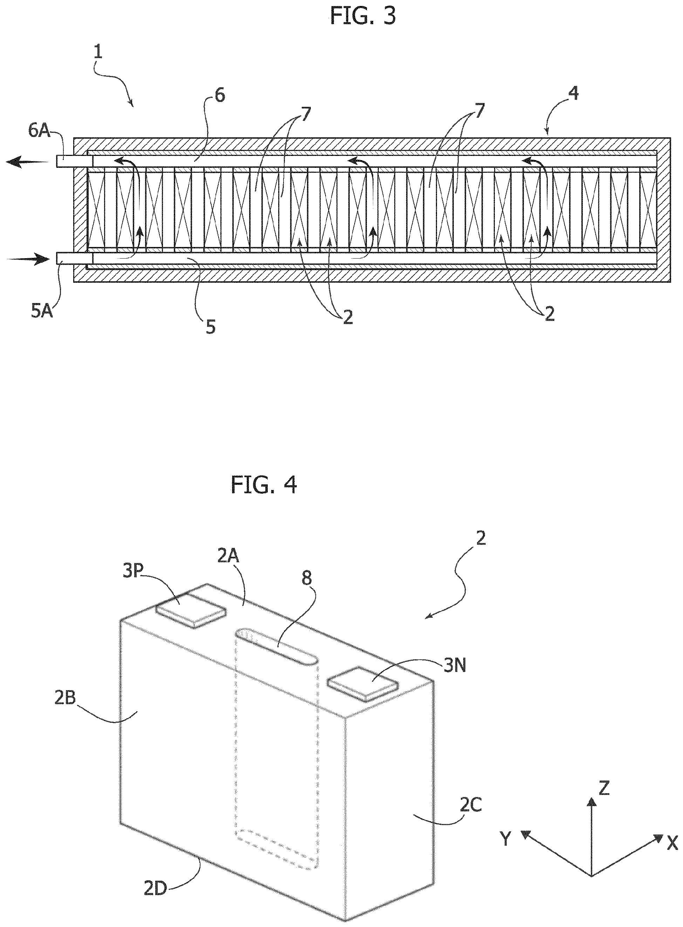

According to the prior art described above, the battery cells 2 are arranged within a hermetic container 4 and are immersed in a dielectric temperature-regulating fluid (for example, an oil). The container 4 defines within it an inlet collector chamber 5 (schematically illustrated in figure 3) which is arranged below the cells 2, and an outlet collector chamber 6 (also schematically illustrated in figure 3) which is arranged above the cells 2. Figure 1 shows an example in which an inlet 5A is provided for the temperature-regulating fluid communicating with the inlet collector chamber 5. Again in the example illustrated in figure 1, two outlets 6A are provided, communicating with the outlet collector chamber 6.

Generally, the inlet 5A is always arranged below the cells 2, while the outlet 6A is arranged above the cells 2, to allow any air bubbles formed within the fluid to be collected in the upper collector chamber. However, this layout is not the only possible one. The inlet and outlet can be inverted when it is possible to provide an inlet pressure capable of avoiding any form of evaporation of the liquid.

Battery modules of the type illustrated in figure 1 are used to make battery units intended to power electric traction motors of electric vehicles. In use, the temperature-regulating fluid enters the inlet collector chamber 5, which is arranged below the battery cells 2, and reaches the outlet collector chamber 6, which is arranged above the battery cells 2, passing through a plurality of passages 7 arranged between the battery cells 2 (in figure 3 the dimensions of the passages 7 have been exaggerated for clarity).

In general, it is of fundamental importance to ensure that during use of the electric vehicle, the battery cells are always at a temperature falling within a predetermined range, typically between a minimum threshold of 20°C and a maximum threshold of 55°C.

This requirement exists both for batteries using battery cells of the prismatic type illustrated in figure 2, and for batteries using battery cells of the cylindrical type, and for batteries using battery cells of the so-called "pouch" type.

The battery cells used in electric vehicles are typically lithium-ion battery cells that tend to develop heat as a result of the chemical reaction that occurs within the battery cell during operation, and also due to the Joule effect caused by the passage of current inside the battery. The term "battery operation" here refers to both the battery charging process and the discharging process, which typically occurs while the vehicle is in motion. It should be noted that the most critical battery operating conditions are those related to the fast charging process, i.e. charging the battery in less than an hour.

During normal operating conditions of the battery unit, the temperature-regulating fluid must perform a cooling action, to counteract the increase in temperature due to the heat that develops in the cells for the reasons indicated above. To this end, the temperature-regulating system comprises a circuit external to the battery module (not shown in figure 1) including one or more heat exchangers configured to cool the hot fluid coming from the outlet 6A, before it is fed again, by a pump (not shown) to the inlet 5A. However, in extreme operating conditions, in particular in cold weather conditions, the temperature-regulating fluid must perform a heating function. To this end, the external circuit may comprise a heater exchanger and/or an electrical resistance heating device.

With reference to the configuration illustrated as an example in figure 3, the experiences conducted on batteries of this type show that the temperature inside the battery module varies considerably both from cell to cell, as the cells 2 that are further away from the inlet 5A of the temperature-regulating fluid are subjected to less cooling, and within each cell, where the temperature distribution tends to be higher where the current lines are denser, for example near the poles.

Numerous studies have shown that:
- to reduce the aging process of the individual battery cell it is advisable to reduce the temperature gradient inside the cell within 5°C
- to avoid a phenomenon of "thermal runaway", destructive for the battery, it is necessary to maintain the entire battery assembly at an average temperature below 55°C.

It is therefore desirable not only to maintain the temperature of the battery cells within a preferred temperature range, but also to try to make the temperature of the different battery cells and the temperature inside each cell as uniform as possible.

From this perspective it is also important to try to obtain substantially equal fluid flow rates through the different passages that connect the inlet collector chamber with the outlet collector chamber.

Furthermore, it is desirable that the flow field in each space separating two adjacent cells is relatively homogeneous and similar for all the spaces between the cells.

### Object of the invention

It is therefore an object of the invention to provide an electric battery unit, in particular an electric battery unit for powering an electric traction motor of an electric vehicle, equipped with a temperature-regulating system configured to maintain the temperature of the battery unit within a predetermined temperature range with a higher degree of efficiency than known solutions.

A further object of the invention is to provide a temperature-regulating system for a battery unit that promotes greater uniformity of temperature within the battery unit, from cell to cell and within each cell, compared to known solutions.

A further object of the invention is to achieve said objectives with relatively simple and low-cost means.

A further specific object of the invention is to promote a substantially equal flow rate of the temperature-regulating fluid in all the passages that connect the inlet collector chamber with the outlet collector chamber.

A further object is to obtain a substantially similar flow field of the temperature-regulating fluid in all the passages.

### Summary of the invention

In order to achieve one or more of said purposes, the invention has as its object an electric battery unit having the features of claim 1.

Thanks to said features, all the passages that connect the inlet collector chamber with the outlet collector chamber oppose to the flow of the temperature-regulating fluid a resistance high enough to discourage a tendency of the temperature-regulating fluid to flow with greater flow rate in the passages that are closer to the inlet of the inlet collector chamber. Consequently, all the cells of the cell array are subjected to a substantially uniform action (cooling or heating, depending on the operating and environmental conditions) by the temperature-regulating fluid.

In various embodiments, said plurality of passages that connect the inlet collector chamber with the outlet collector chamber comprises a plurality of external passages located outside of the battery cells, formed between one battery cell and another, and/or a plurality of internal passages each formed through the body of a respective battery cell, within the battery cell, each of said external passages and each of said internal passages having a respective restricted section.

In one embodiment:
- the battery cells are prismatic cells having major surfaces and side surfaces,
- the cells are aligned in a direction orthogonal to their major surfaces,
- the said external passages include both first passages defined between facing major surfaces of adjacent cells, and second passages defined between the side surfaces of the cells and the container,
- one or more restricted sections are associated with each of said first passages, and one or more restricted sections are associated with each of said second passages,
the ratio of the total areas of passage through the restricted sections of each of the second passages and each of the first passages is equal to the ratio of the dimensions of each cell in the direction of cell alignment and in the horizontal direction orthogonal to it.

In other embodiments, said restricted sections include concentrated restricted sections or distributed restricted sections, which are each defined by a body of porous material, or include both concentrated restricted sections and distributed restricted sections, arranged in series or in parallel with each other.

In one variant, the battery unit is configured to receive a temperature-regulating fluid in gaseous form, such as air.

In one example, the battery unit is further characterized in that:
- said inlet opening of the container is a first inlet opening,
- said container has a second inlet opening for the temperature-regulating fluid that does not communicate with the first inlet opening,
- said container has said inlet collector chamber that constitutes a first inlet collector chamber, communicating with said first inlet opening,
- said container also has a second inlet collector chamber, that does not communicate with the first inlet collector chamber and that communicates with said second inlet opening,
- said first inlet collector chamber communicates with said outlet collector chamber only through said internal passages, formed within respective battery cells,
- said second inlet collector chamber communicates with the outlet collector chamber only through said external passages formed on the outside of the battery cells.

In a particularly preferred embodiment, the battery unit comprises at least one electrically actuated valve configured to regulate flow through one of said first inlet opening and said second inlet opening, said at least one electrically actuated valve being controlled by an electronic controller depending upon the operating condition of the battery unit.

Thanks to the above features, the temperature-regulating system of the battery unit according to the invention ensures on the one hand that each battery cell remains within a predetermined temperature range and on the other hand that the temperature of the different battery cells and the temperature of the different areas of each battery cell is more uniform than what is possible to obtain with known solutions.

The provision of passages for the temperature-regulating fluid within the battery cells ensures greater uniformity of temperature in the various areas of each cell. At the same time, the provision of said internal passages, together with the external passages, allows to obtain maximum efficiency in the temperature-regulating action.

In the embodiment that provides for the use of a regulating valve, it is possible to obtain a regulation, for example, of the flow of temperature-regulating fluid that passes through the external passages. In this way, it is possible, for example, to suppress the flow of fluid through the external passages and create a flow of temperature-regulating fluid only through the internal passages in an initial phase of battery operation, when it is important to obtain the maximum effectiveness of the cooling action inside the cells. When, however, the battery unit reaches a steady state condition, the regulating valve is opened to obtain the maximum possible effectiveness in obtaining uniform cooling of the different cells.

This process can be applied both during the battery warm-up phase, that is, when the temperature of the cells is below the optimal operating range between 20°C and 55°C, and when the temperature of the cells increases rapidly tending to exceed the maximum threshold value of the temperature of the active material of the cells, equal to 55-60°, for example while the vehicle is moving or during the charging process,

In particular during the fast charging process, a cyclic alternation (for example a transition every 3-4 minutes) between the cooling of only the internal part of the cells and the simultaneous cooling of both the internal and external part could be even more effective.

In order to better quantify the meaning of the words "fast charging", a parameter called "C-rate" has been introduced and defined as the charging power - in kW - divided by the battery capacity in kWh. So, for example, if the charging system has a power of 300 kW and the battery has a nominal capacity of 100 kWh, the C-rate is equal to 3 [h^-1] which corresponds to a charging time of 20 minutes. If the charging system had a power of 600 kW, the C-rate would be equal to 6, or the charging time would be 10 minutes. It is therefore evident that the higher the C-rate, the greater the heat released by the cells that needs to be removed to avoid exceeding the temperature threshold value of 50-55°C.

Said internal passages are formed in at least some of the battery cells, which are in a position furthest from said inlet opening and/or from said outlet opening for the temperature-regulating fluid and the configuration and dimensions of the internal passages of different cells may be the same or different from each other. In one example, said internal passages are sized to define an increasing heat-exchange surface from one cell to another, as a function of the distance of each cell from said inlet opening and/or from said outlet opening for the temperature-regulating fluid.

In an embodiment where the cells are prismatic or pouch or cylindrical cells, said internal passages are configured and sized such that:
- if S1 is the surface in contact with the temperature-regulating fluid of a cell without the internal passage,
- if V1 is the volume of a cell without the internal passage,
- if R1 [m⁻¹] is the ratio of S1 to V1,
- if S2 is the surface area in contact with the temperature-regulating fluid of a cell with the internal passage,
- if V2 is the volume of the cell with the internal passage,
- if R2 [m⁻¹] is the ratio of S2 to V2,
- then:
- R2 is equal to at least 1.2·R1, and preferably is equal to at least 1.35·R1, in the case of a prismatic or pouch cell, and
- R2 is equal to at least R1·1.1, and preferably is equal to at least 1.2·R1, in the case of a cylindrical cell.

Experiments conducted by the Applicant have shown that thanks to these features, the battery can be recharged with a C-rate of at least 3 and, in the case of the preferred values, with a C-rate higher than 3.

Finally, it should be noted that the thermal conductivity of the active material of lithium ion cells is of the order of magnitude of few tens of W/(m*K) (that of aluminum is equal to 204 W/(m*K), therefore the smaller the heat-exchange surface/volume ratio of the cell, the greater the temperature gradient between the innermost points of the cell compared to those on the surface.

### Detailed description of the invention

Further features and advantages of the invention will result from the following description with reference to the attached drawings, provided purely by way of non-limiting example, in which:
- figure 1 is a perspective view of an exemplary embodiment of an electric battery module, comprising a plurality of prismatic battery cells,
- figure 2 is a schematic perspective view of a battery cell of the type used in the battery module of figure 1,
- figure 3 is a schematic view of a cooling system provided in the battery module of figure 1,
- figure 4 shows a battery cell including an internal passage, formed through the battery body, for the temperature-regulating fluid,
- figure 5 is a partial schematic view of a battery module including a plurality of cylindrical type battery cells,
- figures 6, 7 are perspective views illustrating the manufacturing technique of a cylindrical battery cell and a "Pouch" type battery cell using a winding technique,
- figure 8 is a variant of figure 5,
- figure 9 is a diagram showing the advantages of the temperature-regulating system,
- figure 10 is a further variant of figure 8 according to a further embodiment,
- figure 11 is a variant of figure 10, showing a further embodiment, particularly preferred,
- figures 12-14 are schematic section views of different embodiments of a battery module, showing the principles underlying the present invention,
- figure 15 is a perspective view of a battery pack including a matrix array of cylindrical battery cells,
- figure 16 is a side view of the battery unit of figure 15,
- figure 17 is a partial schematic and section view along the line XVII-XVII of figure 16,
- figure 18 illustrates detail XVIII of figure 17 on an enlarged scale, and
- figure 19 is a schematic plan view of a battery pack including a matrix array of the prismatic ones.

Figures 1-3 relating to the prior art have already been described above.

In figures 4-10, the parts common to those of figures 1-3 are indicated with the same reference numbers. In the case of the examples illustrated in these figures, inside at least some battery cells, whether they are prismatic battery cells, whether they are cylindrical battery cells, whether they are pouch-type battery cells, an internal passage for the temperature-regulating fluid is provided, which passes through the body of the battery cell from its lower end to its upper end (with reference to the condition illustrated in the attached drawings).

As will also be clear in the following, the concepts that are the basis of the present invention are preferably applied to a battery unit in which the battery cells have said internal passages for the temperature-regulating fluid. However, the invention is also applicable to battery units of the conventional type that only provides passages for the temperature-regulating fluid obtained outside the cells and not also passages formed within the cells.

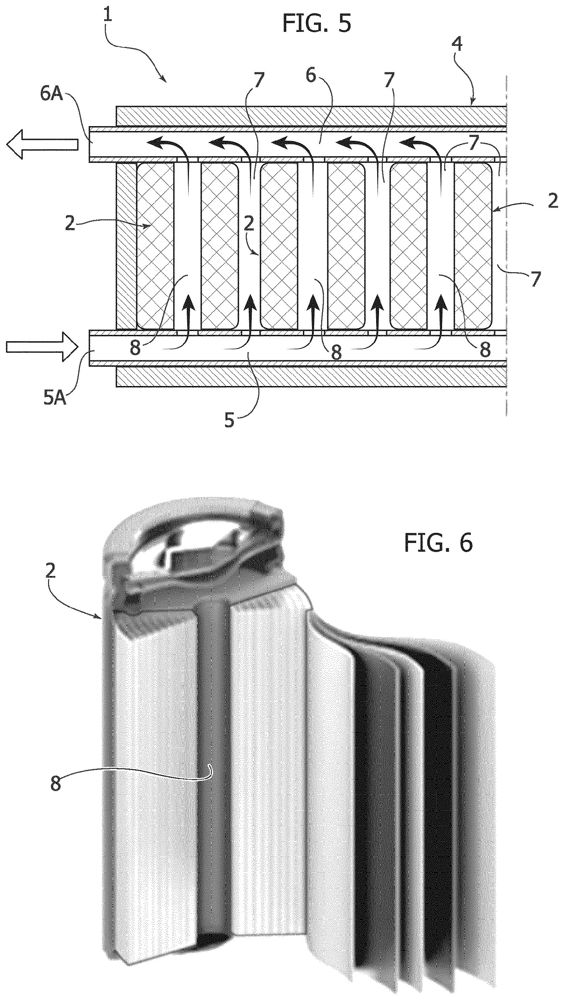

Figure 4 shows an example of a prismatic battery cell 2, completely similar to the one illustrated in figure 2, which however has the difference consisting in the provision of an internal passage 8 for the temperature-regulating fluid, which passes entirely through the body of the cell 2 from the lower wall to the upper wall. The same concept can also be applied to a cylindrical cell 2 (figure 6) or to a pouch-type cell 2.

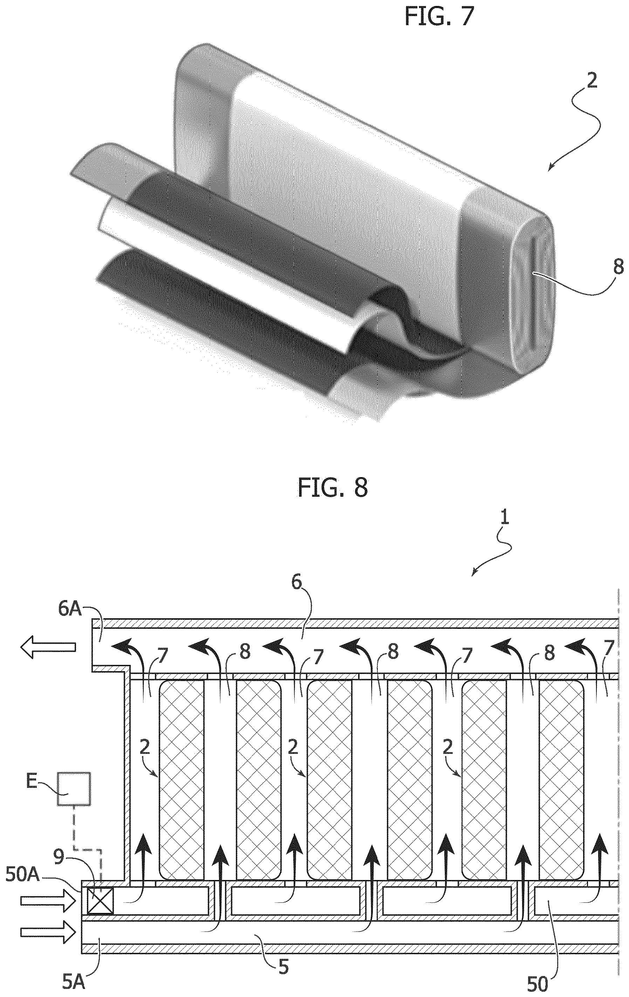

Figures 6, 7 show a well-known winding technique for constructing cylindrical and pouch battery cells. The same technique can also be applied to constructing prismatic battery cells illustrated in figure 4. Using this technique, it is possible to easily obtain the internal passage 8 for the temperature-regulating fluid.

The shape and size of the hole depend on the type of battery and the application; in general, it is desirable that:
- for prismatic and pouch batteries, the internal hole is such as to increase the heat-exchange surface/volume ratio of the original cell without a hole by at least 20%,
- for cylindrical batteries, thanks to a more favorable symmetry with respect to the longitudinal axis, the increase can be less accentuated, for example it can be 10-15% of the heat-exchange surface/volume ratio of the original cell.

More precisely:
- if S1 is the surface in contact with the temperature-regulating fluid of a cell without the internal passage,
- if V1 is the volume of a cell without the internal passage,
- if R1 [m⁻¹] is the ratio of S1 to V1,
- if S2 is the surface area in contact with the temperature-regulating fluid of a cell with the internal passage,
- if V2 is the volume of the cell with the internal passage,
- if R2 [m⁻¹] is the ratio of S2 to V2,
- then:
- R2 is equal to at least 1.2·R1, and preferably is equal to at least 1.35·R1, in the case of a prismatic or pouch cell, and
- R2 is equal to at least R1·1.1, and preferably is equal to at least 1.2·R1, in the case of a cylindrical cell.

It is understood that if, in the design phase of the temperature-regulating system of the battery, the ability to charge the cell with particularly high C-rate values (>3) is desired, these values must be increased to 35-45% for prismatic and pouch cells and 15-25% for cylindrical cells, respectively.

Figure 5 shows a battery unit including cylindrical battery cells 2. The drawing illustrates only three battery cells, but it is understood that the battery unit may include one or more rows of battery cells, each composed of any number of battery cells.

In the solution of figure 5, in accordance with the known solution of figure 3, the assembly 1 includes a container 4 that defines an inlet collector chamber 5, which is arranged below the battery cells 2, which receives temperature-regulating fluid from an inlet 5. Above the battery cells 2, the container 4 defines an outlet collector chamber 6, communicating with an outlet 6A. As can be seen in figure 5, the inlet collector chamber 5 and the outlet collector chamber 6 communicate with each other both through a plurality of external passages 7, formed on the outside of the battery cells 2, between one cell and another, and through a plurality of internal passages 8, formed through the body of each cell 2, from one end of the cell to another.

In this way, the temperature-regulating system of the battery unit is able to achieve a double result: on the one hand, the temperature inside the body of each battery cell is significantly more uniform than in a solution like that shown in figure 3. This result is achieved thanks to the larger heat-exchange surface/volume ratio and therefore to a greater tendency of the cell to release heat rather than trap it inside. On the other hand, a greater temperature uniformity is also achieved from one cell to another. Finally, the temperature of each cell remains within the specified temperature range. Of course, it is not said that all the battery cells in the battery unit each have an internal passage 8 and above all that the internal passage 8 is identical for all the cells assembled in the container: for example, cells closer to the inlet or outlet of the container may have less cooling requirements and therefore require smaller heat-exchange surface/volume ratios (i.e. smaller hole passage section). For example, it is possible to provide such internal passage only for a part of the battery cells that are located in a more distant position with respect to the inlet opening 5A, so as to promote greater uniformity of temperature from one cell to another; alternatively, the passage section could be - for example - continuously increasing from the first cell to the last cell present in the container.

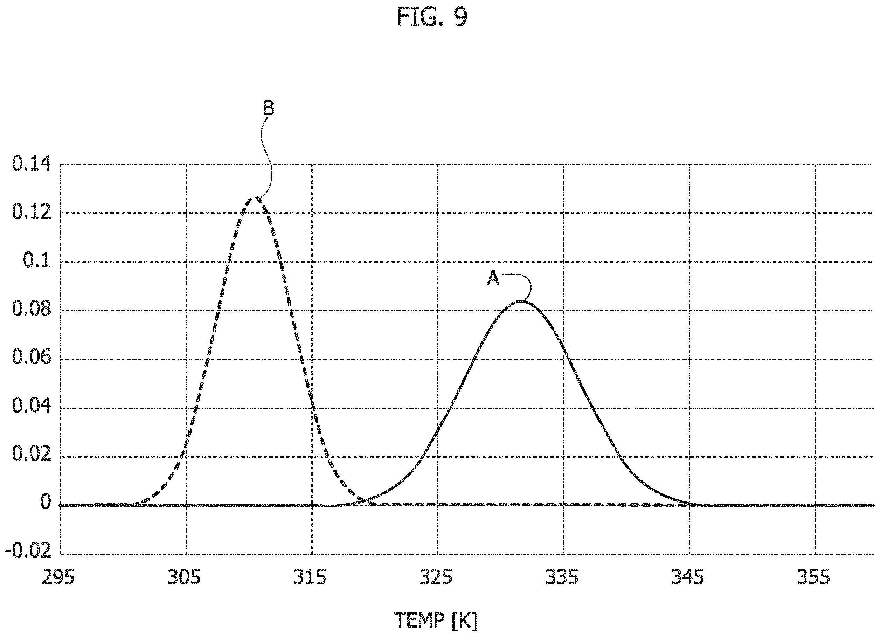

The advantages of the solution in figure 5 are shown in figure 9, relating to the results of tests carried out by the Applicant on a battery unit of the type in figure 5. In this figure, diagram A refers to the temperature distribution inside a battery cell along the vertical dimension of the battery cell. As can be seen, diagram A is a Gaussian bell that shows a relatively high average temperature (approximately 330°K) and a relatively wide temperature variability range (from 315°K to 345°K). Diagram B refers to the same battery cell in the case where the internal passage to the battery cell for the temperature-regulating fluid is provided. As can be seen, the average temperature is lower (approximately 310°K) and the temperature variability range is narrower (from 300°K to 320°K).

Figure 8 illustrates a further embodiment that provides for the provision of two separate inlet collector chambers. A first inlet collector chamber 5 communicates only with the internal passages 8, formed through the body of each battery cell 2, while a second collector chamber 50, communicating with a second inlet opening 50A, communicates only with the external passages 7, formed between one cell and another. The internal passages 8 and the external passages 7 then all communicate with a single outlet collector chamber 6 and with the outlet opening 6A.

In the solution of figure 8, preferably, in the second inlet opening 50A communicating with the external passages 7 there is an electrically actuated flow regulating valve 9, of any known type, configured to be controlled by an electronic controller E. In a simplified embodiment, the valve 9 may be of the on/off type. In a more advanced embodiment, the valve 9 may be of any known type capable of allowing the flow of the temperature-regulating fluid to be regulated progressively between a zero value and a maximum value.

The electronic controller E can be configured so that, after the electric motor of the electric vehicle is activated, the temperature-regulating fluid is conveyed only to the internal passages 8, after closing the regulating valve 9, so as to obtain greater efficiency in the internal cooling of the battery cells, in a phase in which the cooling determined by the external passages would be less effective. Once a steady-state condition is reached, the valve 9 is opened to allow the flow of element fluid also through the external passages 7.

Of course, nothing excludes the possibility of providing a control system operating in a different way, for example by giving priority to the flow through the external passages 7 and only allowing the arrival of the temperature-regulating fluid to the internal passages in a subsequent phase. This solution would imply the provision of a regulating valve at inlet 5A, communicating with internal passages 8. It is also possible to provide for the provision of two regulating valves, one at inlet 5A and the other at inlet 50A. Furthermore, the electronic controller E can be configured in any other way to open and close the communication of the internal passages 8 and the external passages 7 with the respective inlet openings 5A and 50A depending on certain operating parameters of the battery unit and/or the electric vehicle.

For example, the electronic controller could be programmed to cyclically alternate cooling/heating of the internal part of the cells only with cooling/heating of both the external and internal part.

As already indicated above, in case of external temperature lower than the range of 25°C - 55°C, particularly for external temperatures lower than -5°C, it is necessary to heat the cells: in this case the hotter fluid could be heated externally to the battery container by means of an electrical resistance.

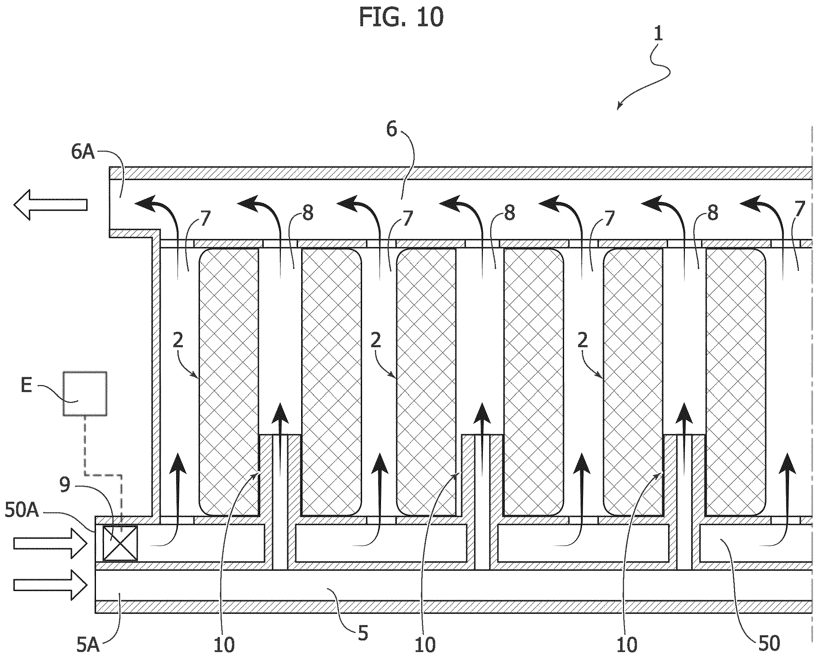

Figure 10 illustrates a further embodiment which substantially coincides with that of figure 8, except that in this case the first inlet collector chamber 5 communicates with the internal passages 8, formed through the body of the battery cells 2, via tubular fittings 10 which engage within lower ends of the internal cavities of the battery cells 2, defining the internal passages 8. In this manner, the tubular fittings 10 also serve as supports for retaining the battery cells 2 on the base structure in which the inlet collector chambers 5 and 50 are formed.

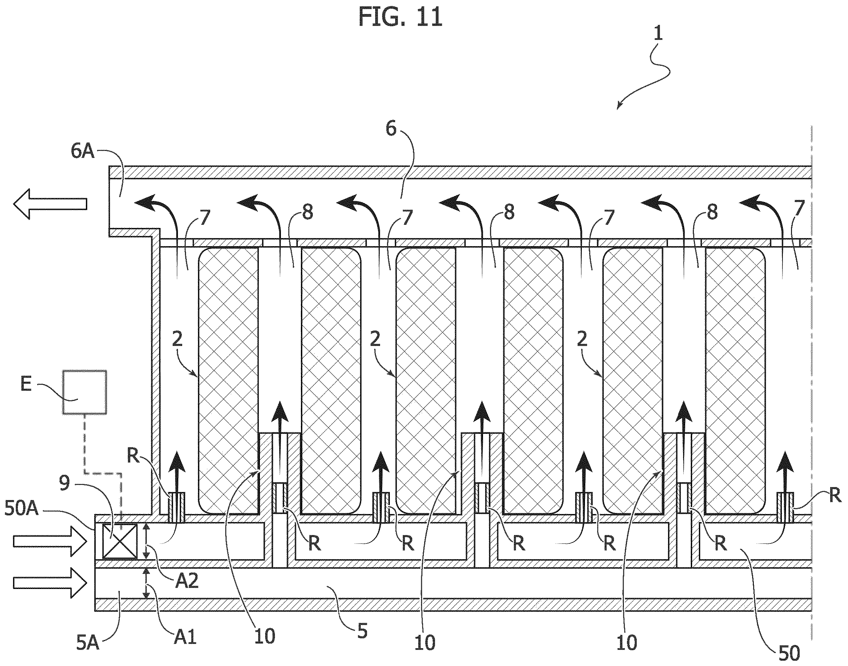

Figure 11 shows a first exemplary embodiment of the concepts underlying the present invention, consisting of a variant of the solution of figure 10. In the case of this example, each of the internal passages 8 formed through the battery cells 2 and each of the external passages 7, formed between one battery cell and another, includes a restricted section R configured and sized to create a given pressure drop, preferably of at least 35 mbar, in the flow of the temperature-regulating fluid through the restricted section R.

The sum of the passage sections of the restricted sections R associated with all the internal passages 8 is chosen to be less than 1/6 of the passage section in the inlet collector chamber 5, in a plane orthogonal to the direction of flow and the sum of the passage sections of the restricted sections R associated with all the external passages 7 is chosen to be less than 1/6 of the passage section in the inlet collector chamber 50, in a plane orthogonal to the direction of flow.

Preferably, the same applies to the passage section of the outlet collector chamber, which is at least six times the sum of the restricted sections R of both the external passages 7 and the internal passages 8.

Thanks to this feature, each of the internal passages and each of the external passages offers a resistance to the flow of the temperature-regulating fluid that is sufficiently high to discourage a tendency for the temperature-regulating fluid to flow with a greater flow rate in the passages closer to the inlet opening for the fluid. In this way, the flow rate of temperature-regulating fluid through said passages is substantially identical for all the passages, regardless of whether a passage is more or less close to the inlet opening.

Studies and experiences of the Applicant have shown that in order to achieve said advantage, the value of the ratio between the passage section of the inlet opening and the sum of the passage sections of all the restricted sections communicating with the inlet opening is critical. In particular, the Applicant has noted that the sum of the passage sections of all the restricted sections must not exceed 1/6 of the passage section in the inlet collector chamber, in a plane orthogonal to the direction of flow. Preferably, the same condition must also be satisfied with respect to the passage section in the outlet collector chamber.

Figure 11 shows an example where the restricted sections R are provided for both the internal passages 8 and the external passages 7. However, it would be possible to provide the restricted sections R only for the external passages 7, or only for the internal passages 8. Furthermore, the restricted sections R are also applicable to embodiments such as those in figure 5, where a single inlet collector chamber is provided, communicating with both the internal passages 8 and the external passages 7. In this case, the passage section in the single inlet collector chamber 5 must be at least six times the sum of all the passage sections through the restricted sections R associated with the passages 7, 8.

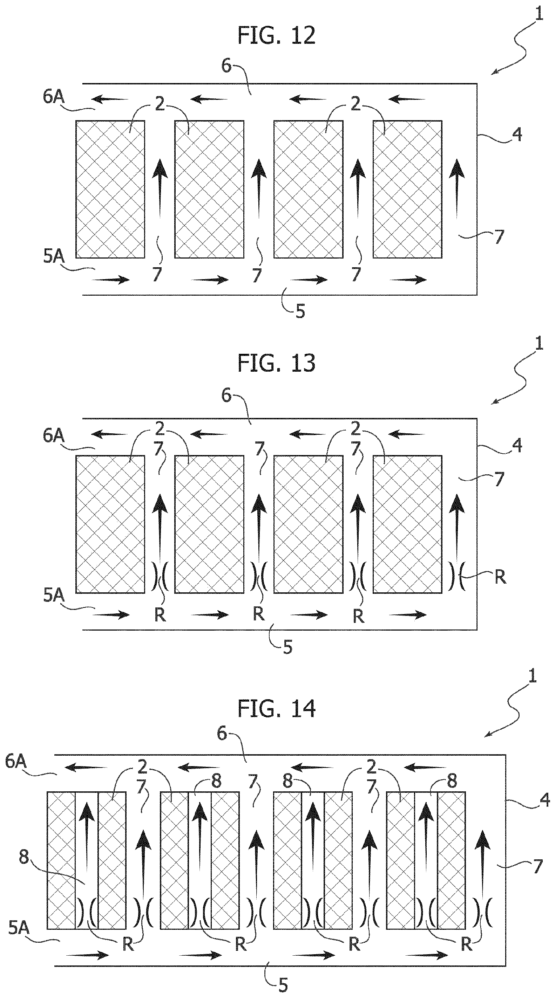

Figure 12 shows a schematic section view of a battery module of the type in figure 3, taking into account however that the battery cells in figure 12 could be cells of any type, prismatic or pouch or cylindrical. In figure 12, parts corresponding to those in figure 3 are indicated with the same references.

In the case of a solution of the type shown in figure 12, there is the drawback that the temperature-regulating fluid, which flows in the directions indicated by the arrows, may tend to flow with a greater flow rate in the passages 7 located closer to the inlet and outlet openings 5A and 6A.

Figure 13 shows a first example of application of the concept that is the basis of the present invention. The passages 7 are associated with restricted sections R configured to cause a pressure drop in the flow of the temperature-regulating fluid, such as to give rise to a resistance that opposes the flow to a sufficient extent to discourage said tendency of the temperature-regulating fluid to flow with a greater flow rate in the passages 7 located closer to the inlet and outlet openings 5A and 6A. In this way, a substantially identical flow rate of the temperature-regulating fluid is obtained in all the passages 7.

Figure 14 shows the further progression of the embodiment of figure 13, consisting of providing both the external passages 7 and the passages 8 inside the cells, and providing restricted sections R in association with both the external passages 7 and the internal passages 8.

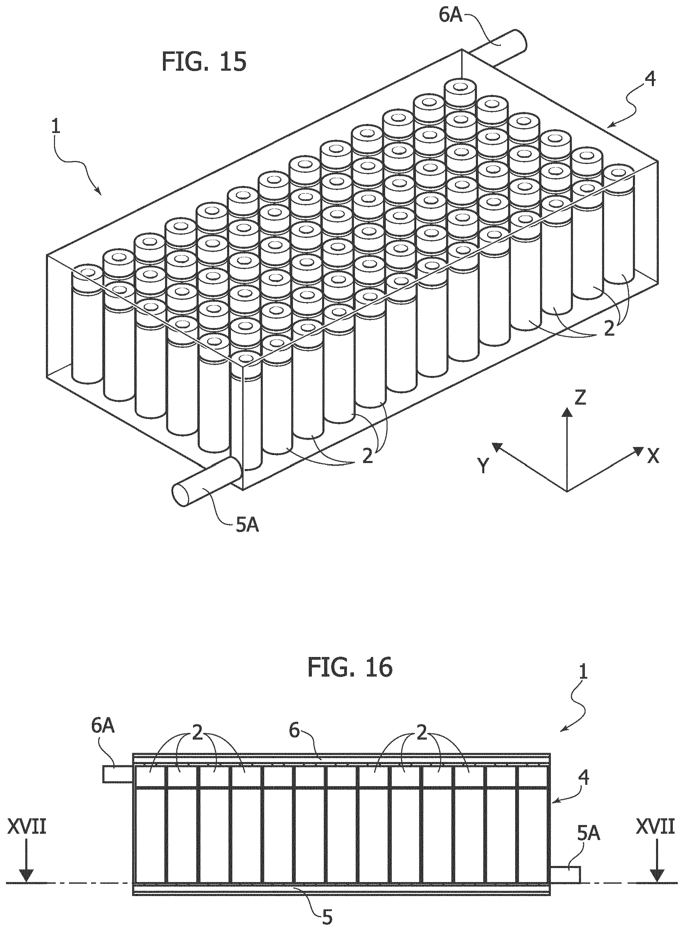

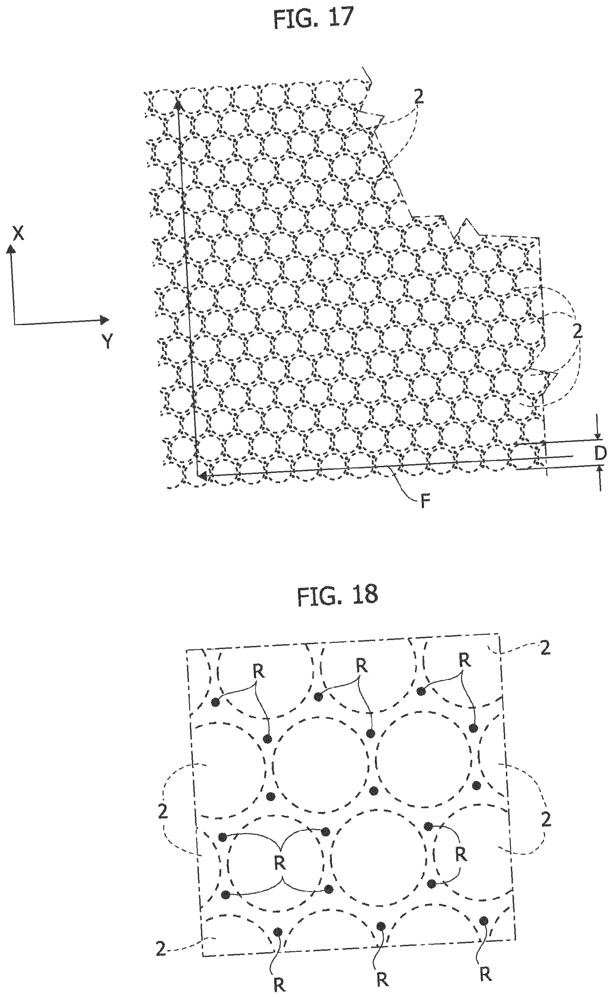

Figure 15 shows an example of a battery pack with cylindrical cells 2, to which the present invention is also applicable. The cylindrical cells 2 are arranged in a matrix array, aligned along two horizontal directions X, Y. Figure 17 illustrates a detail on an enlarged scale of a section along the line XVII-XVII of figure 16, with reference to a variant in which the cells 2 are arranged, viewed in plan, in a honeycomb shape. The inlet collector chamber 5 constitutes a single space below the cells 2. This space communicates with passages obtained between one cell and another through holes constituting the restricted sections R (see the detail of figure 18 on a further enlarged scale).

According to the invention, the overall passage area through the restricted sections R must not exceed a certain limit with respect to the passage section in the inlet collector chamber 5 and preferably also with respect to the passage section in the outlet collector chamber 6. In the specific case, for greater safety, the limit case is considered in which the temperature-regulating fluid passes, with reference to figure 17, from the inlet 5A, located in the lower collector chamber, to the outlet 6A, located in the upper collector chamber (the connections 5A and 6A are arranged at different heights) following the longest path F, i.e. first along the direction Y and then along the direction X, thus travelling along the two sides of the matrix array (see figure 17). The condition always applies that the total passage area (Atot) of all the restricted sections located along the path F of the fluid must not exceed 1/6 of the area (A1) of the passage section of the fluid in the inlet collector chamber, in analogy with what was seen in the case of a module of cells aligned along a single direction X. In the case illustrated in figures 15-18, the passage area in the inlet collector chamber is considered equal to the product D × H, where D is the horizontal dimension (i.e. the diameter) of the single cell 2, while H is the height of the inlet collector chamber. The total passage area Atot associated with the restricted sections R is considered equal to the product R1 × N, where R1 is the passage area of each restricted section R and N is the number of restricted sections associated with the cells located along the path F.

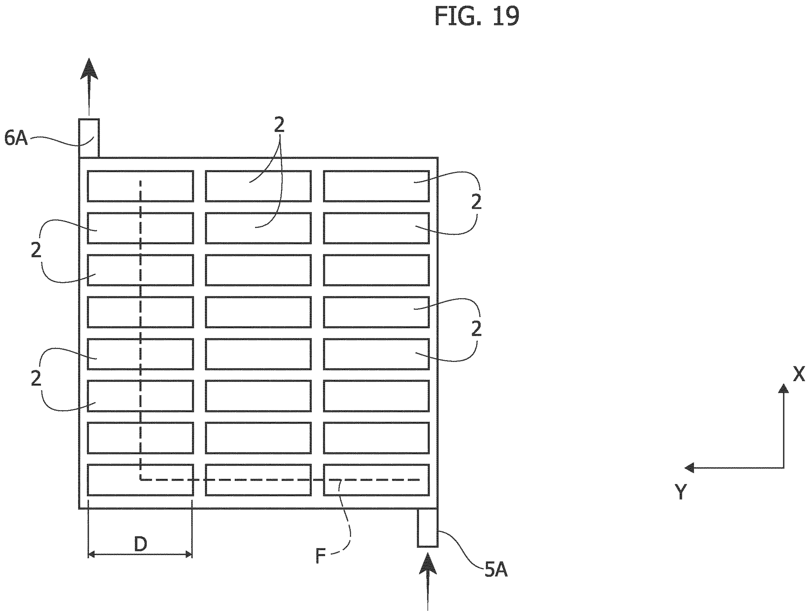

Figure 19 shows a plan view of a battery pack including a matrix array of prismatic cells 2 aligned along two mutually orthogonal directions X, Y. Also in this case, internal passages and external passages to the cells with respective restricted sections can be provided. Also in this case, it is necessary that the total passage area through the restricted sections does not exceed a certain limit with respect to the passage section of the inlet collector chamber and preferably also of the outlet collector chamber. In this specific case, for greater safety, the limit case is considered in which the temperature-regulating fluid passes, with reference to figure 19, from inlet 5A, located in the lower collector chamber, to outlet 6A, located in the upper collector chamber (the connections 5A and 6A are arranged at different heights) following the longest path F, i.e. first along the direction Y and then along the direction X, thus travelling along the two sides of the matrix array. The condition always applies that the total passage area (Atot) of all the restricted sections located along the path F of the fluid must not exceed 1/6 of the area (A1) of the passage section of the fluid in the inlet collector chamber.

In the case illustrated in figure 19, the passage area in the inlet collector chamber is considered equal to the product D × H, where D is the largest horizontal dimension of the single cell 2, while H is the height of the inlet collector chamber. The total passage area Atot associated with the restricted sections R is considered equal to the product R1 × N, where R1 is the passage area of each restricted section R and N is the number of restricted sections associated with the cells located along the path F (10 cells in the example in figure 12; restrictions associated with a cell are understood to be the sum of those for the external path 7 and the internal path 8).

Differently from what is represented in figure 8 and figure 11, the restricted sections R can be of the distributed type rather than concentrated, that is, they can be constituted by bodies of porous material, which generate a distributed flow resistance RD. For example, the distributed resistance RD could consist of a predefined volume of porous material having a known hydraulic resistance per unit length of fluid passage. The hydraulic resistance can vary significantly depending on the porous material chosen. In this case, all the considerations previously made are valid, provided that the development of the resistance RD along the direction of the flow introduces the same pressure drop as the restricted section R.

Another possible case consists of combinations of concentrated resistances R and distributed resistances RD: for example, for an internal passage 8 of a given cell, it could be possible to introduce both a concentrated restricted section R' that introduces a pressure drop equal to half the pressure drop corresponding to the restricted section R of figures 8 and 11, and, connected in series, a volume of porous material RD', whose length in the direction of the flow is characterized by the introduction of a pressure drop equal to half the pressure drop corresponding to the restricted section R.

The above also applies to the case in which the passage 8 inside a single cell is divided into n passages, which are however configured and sized to satisfy the relationships indicated above relating to the ratio R2.

In embodiments that use prismatic cells, in the space between one battery cell and another, several vertical partitions can be provided that are parallel and spaced apart, which define, between one cell and another, a plurality of parallel vertical corridors for the temperature-regulating fluid.

Of course, notwithstanding the principle of the invention, the construction details and embodiments may vary widely with respect to what is described and illustrated purely by way of example, without thereby departing from the scope of the present invention, as defined in the attached drawings.

## Claims

1. An electric battery unit (1), comprising an array of battery cells (2), immersed in a temperature-regulating fluid within a container (4) of the battery unit (1), for maintaining the battery unit within a specified temperature range,
wherein the battery cells (2) within the container (4) form a matrix of cells (2) aligned along two orthogonal directions (X, Y),
wherein said container (4) includes:
- an inlet opening (5A) for the temperature-regulating fluid communicating with an inlet collector chamber (5), which is arranged below the array of battery cells (2),
- an outlet opening (6A) for the temperature-regulating fluid, communicating with an outlet collector chamber (6), which is arranged above the array of battery cells (2),
wherein the inlet collector chamber (5) and the outlet collector chamber (6) communicate with each other through a plurality of passages (7, 8),
said electric battery unit being **characterized in that**:
- each of said passages (7, 8) includes at least one restricted section (R) configured and sized to create a given pressure drop, preferably of at least 35 mbar, in the flow of the temperature-regulating fluid through the restricted section (R),
- the sum (Atot) of the areas of the restricted sections (R) of the passages (7, 8) associated with the cells arranged along two sides of said matrix of cells, is not greater than 1/6 of the product D × **H,** where D is the largest horizontal dimension of each cell, and H is the height of the inlet collector chamber (5).

2. The battery unit according to claim 1, **characterized in that** said plurality of passages comprises a plurality of external passages (7) located outside of the battery cells (2), formed between one battery cell (2) and another, and/or a plurality of internal passages (8) each formed through the body of a respective battery cell (2), within the battery cell (2), each of said external passages (7) and each of said internal passages (8) having a respective restricted section (R).

3. The battery unit according to claim 1, **characterized in that**:
- the battery cells are prismatic cells having major surfaces (2B) and side surfaces (2C),
- the cells (2) are aligned in a direction (X) orthogonal to their major surfaces,
- the said external passages (7) include both first passages defined between facing major surfaces (2B) of adjacent cells, and second passages defined between the side surfaces (2C) of the cells and the container (4),
- one or more restricted sections are associated with each of said first passages, and one or more restricted sections are associated with each of said second passages,
the ratio of the total areas of passage through the restricted sections of each of the second passages and each of the first passages being equal to the ratio of the dimensions of each cell in the direction (X) of cell alignment and in the horizontal direction (Y) orthogonal to it.

4. The battery unit according to claim 1, **characterized in that** said restricted sections comprise concentrated restricted sections (R), or distributed restricted sections (RD), which are each defined by a body of porous material, or comprise both concentrated restricted sections and distributed restricted sections, arranged in series or in parallel with each other.

5. The battery unit according to claim 1, **characterized in that** it is configured to receive a temperature-regulating fluid in gaseous form, e.g., air.

6. The battery unit according to claim 2, **characterized in that** said internal passages (8) are formed in at least some of the battery cells (2), and that the configuration and dimensions of the internal passages of different cells may be the same or different from each other.

7. The battery unit according to claim 6, **characterized in that** said internal passages (8) are sized to define an increasing heat-exchange surface from one cell (2) to another, depending on the distance of each cell from said inlet opening (5A) and/or from said outlet opening (6A) for the temperature-regulating fluid.

8. The battery unit according to claim 2, **characterized in that** said cells (2) are prismatic or pouch or cylindrical cells, and that said internal passages (8) are configured and sized such that:
- if S1 is the surface in contact with the temperature-regulating fluid of a cell without the internal passage,
- if V1 is the volume of a cell without the internal passage,
- if R1 [m⁻¹] is the ratio of S1 to V1,
- if S2 is the surface area in contact with the temperature-regulating fluid of a cell with the internal passage,
- if V2 is the volume of the cell with the internal passage,
- if R2 [m⁻¹] is the ratio of S2 to V2,
- then:
- R2 is equal to at least 1.2·R1, and preferably is equal to at least 1.35·R1, in the case of a prismatic or pouch cell, and
- R2 is equal to at least R1·1.1, and preferably is equal to at least 1.2·R1, in the case of a cylindrical cell.

9. The battery unit according to claim 2, **characterized in that**:
- said inlet opening (5A) of the container (4) is a first inlet opening,
- said container (4) has a second inlet opening (50A) for the temperature-regulating fluid, which does not communicate with the first inlet opening (5A),
- said container (4) has said inlet collector chamber (5) constituting a first inlet collector chamber, communicating with said first inlet opening (5A),
- said container (4) also has a second inlet collector chamber (50) which does not communicate with the first inlet collector chamber (5), and which communicates with said second inlet opening (50A),
- said first inlet collector chamber (5) communicates with said outlet collector chamber (6) only through said internal passages (8) formed within respective battery cells (2),
- said second inlet collector chamber (50) communicates with the outlet collector chamber (6) only through said external passages (7) formed on the outside of the battery cells (2).

10. The battery unit according to claim 9, **characterized in that** it comprises at least one electrically actuated regulating valve (9), configured to regulate the flow through one of said first inlet opening (5A) and said second inlet opening (50) and **in that** said at least one electrically actuated regulating valve (9) is controlled by an electronic controller (E) depending upon the operating condition of the battery.

11. The battery unit according to claim 10, **characterized in that** said electronic controller (E) is configured to control said regulating valve (9) in such a way that it alternates periodically, for example every 3-4 minutes, between an operating phase in which the temperature-regulating fluid travels only through the internal passages (8) and an operating phase in which the temperature-regulating fluid travels through both the internal passages (8) and the external passages (7).

12. The battery unit according to claim 9, **characterized in that** said first inlet collector chamber (5) communicates with said internal passages (8) via tubular fittings (10) formed in the container base structure (4) and each engaged within a lower portion of a cavity defining the respective internal passage (8), such that said tubular fittings (10) also serve as supports for retaining said battery cells on said container base structure (4).
